# EUROPÄISCHE PATENTSCHRIFT

(11) **EP 2 144 726 B1**
(45) Veröffentlichungstag und Bekanntmachung des Hinweises auf die Patenterteilung: **06.07.2011**
(21) Anmeldenummer: 07724966.2
(22) Anmeldetag: 08.05.2007
(51) Int. Cl.: B23D 59/00, B27B 5/075, B27G 19/10

(54) **VERFAHREN ZUM BETREIBEN EINER PLATTENAUFTEILANLAGE FÜR GROSSFORMATIGE PLATTEN SOWIE PLATTENAUFTEILANLAGE FÜR GROSSFORMATIGE PLATTEN**
METHOD FOR OPERATING A BOARD PARTITIONING SYSTEM FOR LARGE-FORMAT BOARDS AND BOARD PARTITIONING SYSTEM FOR LARGE-FORMAT BOARDS
PROCÉDÉ POUR FAIRE FONCTIONNER UN ÉQUIPEMENT DE DIVISION DE PANNEAUX POUR DES PANNEAUX DE GRANDE TAILLE ET ÉQUIPEMENT DE DIVISION DE PANNEAUX POUR DES PANNEAUX DE GRANDE TAILLE

(43) Veröffentlichungstag der Anmeldung: 20.01.2010
(73) Patentinhaber: HOLZMA Plattenaufteiltechnik GmbH, 75365 Calw-Holzbronn (DE)
(72) Erfinder: ELHAUS, Uwe, 75365 Calw (DE)
(74) Vertreter: Knapp, Thomas
(86) Internationale Anmeldenummer: PCT/EP2007/004042
(87) Internationale Veröffentlichungsnummer: WO 2008/135066

(56) Entgegenhaltungen:
- EP-A- 1 066 906
- EP-A- 1 074 326
- DE-A1- 19 520 108
- US-B1- 6 422 227

## Beschreibung

### Stand der Technik

Die Erfindung betrifft ein Verfahren zum Betreiben einer Plattenaufteilanlage für großformatige Platten, insbesondere zur Herstellung von Möbeln, sowie eine Plattenaufteilanlage für großformatige Platten, nach den Oberbegriffen der nebengeordneten unabhängigen Patentansprüche 1 und 10. Ein solches Verfahren und eine solche Anlage sind der DE 195 20 108 A1 zu entnehmen.

Vom Markt her bekannt sind Plattenaufteilanlagen mit einer Säge mit einem Sägeblatt und einem Vorritzer mit einem Vorritzerblatt. Durch einen solchen Vorritzer wird eine Vorritzernut im Bereich der Oberfläche eines plattenförmigen Werkstücks eingebracht, welche jedoch das Werkstück nicht trennt. Der eigentliche Trennvorgang wird durch die Säge und deren Sägeblatt durchgeführt. Die Breite der Vorritzernut ist üblicherweise gleich wie die Breite der Sägefuge, die die Säge herstellt, oder sie ist etwas größer (maximal 0,1 mm) als die Breite der Sägefuge. Durch den Vorritzer wird vermieden, dass die Werkstückoberfläche beim eigentlichen Trennvorgang durch die Säge ausreißt. Dies gilt insbesondere für Werkstücke mit einer Oberflächenbeschichtung. Bekannt sind ferner Vorritzer mit einem konischen Vorritzerblatt, bei denen die Breite der Vorritzernut über deren Tiefe eingestellt wird.

Bei der Herstellung der Vorritzernut ist es wichtig, dass diese mit der später eingebrachten Sägefuge möglichst exakt fluchtet. Daher wird in der DE 195 20 108 A1 vorgeschlagen, beim Start eines Sägevorgangs das Sägeblatt der Säge und das Vorritzerblatt des Vorritzers mittels Sensoren zu vermessen, und abhängig von dem Messergebnis die Position des Vorritzerblatts gegenüber dem Sägeblatt einzustellen. Diese bekannte Vorrichtung hat jedoch den Nachteil, dass sie sehr komplex ist und dass das Arbeitsergebnis, also die Flucht zwischen Vorritzernut und Sägefuge, häufig nicht gewährleistet ist.

### Offenbarung der Erfindung

Aufgabe der vorliegenden Erfindung ist es daher, ein Verfahren anzugeben, mit dem die Flucht zwischen Vorritzernut und Sägefuge möglichst einfach und präzise eingestellt werden kann. Aufgabe der vorliegenden Erfindung ist es ferner, eine entsprechende Plattenaufteilanlage zu schaffen.

Diese Aufgaben werden durch ein Verfahren und eine Plattentaufteilanlage mit den Merkmalen der nebengeordneten unabhängigen Patentansprüche 1 und 10 gelöst. Vorteilhafte Weiterbildungen der Erfindung sind in Unteransprüchen angegeben.

Bei dem erfindungsgemäßen Verfahren und der erfindungsgemäßen Plattenaufteilanlage wird auf eine aufwändige Vermessung des Sägeblatts und des Vorritzerblatts verzichtet. Statt dessen wird einfach, wenn für notwendig befunden, ein spezielles Justierverfahren durchgeführt. Bei diesem wird in einem ersten Schritt vom Sägeblatt in die Unterseite einer Platte eine Sägenut eingebracht, das Sägeblatt wird also so eingestellt, dass es das Werkstück nicht durchtrennt, oder es wird eine Sägefuge in das Werkstück eingebracht, welche das Werkstück mindestens bereichsweise trennt. Hierzu wird das Sägeblatt in Drehung versetzt und der Sägewagen, auf dem das Sägeblatt und das Vorritzerblatt hintereinander angeordnet sind, verfahren. Beispielsweise noch mit dieser Verfahrbewegung des Sägewagens oder unmittelbar danach wird die Position der Sägenut bzw. -fuge von einer elektronischen Erfassungseinrichtung erfasst. Das Sägeblatt wird wieder abgesenkt, die Platte um eine Vorschubstrecke vorwärts bewegt, und dann bei einer erneuten Bewegung des Sägewagens mittels des Vorritzerblattes eine Vorritzernut in die Unterseite des Werkstücks eingebracht. Nach dem Einbringen der Vorritzernut werden deren Position wieder von der gleichen Erfassungseinrichtung erfasst. Die erfassten Positionen werden dann, bezogen auf eine gemeinsame Referenz, verglichen und erforderlichenfalls, wenn eine unzulässige Abweichung (größer als ein Grenzwert) festgestellt wird, die Position des Vorritzerblattes und/oder des Sägeblattes quer zur Blattebene so korrigiert, dass diese möglichst exakt fluchten.

Dieses Justierverfahren kann beispielsweise jedes Mal dann durchgeführt werden, wenn entweder das Sägeblatt oder das Vorritzerblatt ausgetauscht wurden. Dabei versteht sich, dass es zur Erzielung der erfindungsgemäßen Vorteile unerheblich ist, ob zuerst die Sägenut oder zuerst die Vorritzernut in die Unterseite der Platte eingebracht wird. Ferner sei an dieser Stelle darauf hingewiesen, dass das Verfahren angewendet werden kann, wenn eine einzelne Platte auf dem Auflagetisch liegt, aber auch, wenn ein ganzer Plattenstapel auf dem Auflagetisch liegt. Bei der Platte, die für das vorgeschlagene Verfahren verwendet wird, kann es sich um eine spezielle für dieses Verfahren vorgesehene Platte handeln, beispielsweise um eine bei einem vorhergehenden Aufteilvorgang angefallene Restplatte, oder es kann sich um eine für einen nachfolgenden Aufteilvorgang vorgesehene Platte handeln.

Bei einer ersten vorteilhaften Weiterbildung des erfindungsgemäßen Verfahrens wird vorgeschlagen, dass es zusätzlich folgende Schritte umfasst:
f. Vergleichen der Breite der Vorritzernut und der Breite der Sägenut oder -fuge;
g. Erforderlichenfalls Korrigieren der Breite der Vorritzernut, so dass ein beidseitiger Überstand der Vorritzernut über die Sägenut wenigstens in etwa einen gewünschten Wert hat.

Damit wird eine besonders hohe Schnittqualität erreicht vorausgesetzt, das Vorritzerblatt ist konisch, so dass die Breiteneinstellung überhaupt möglich ist.

Vorgeschlagen wird ferner, dass die elektronische Erfassungseinrichtung mindestens zeitweise ein Bild der Sägenut oder -fuge und der Vorritzernut liefert. Hierzu kann die Erfassungseinrichtung beispielsweise einen preiswerten Monitor umfassen, auf dem die Vorritzernut und die Sägenut oder -fuge visualisierbar sind. Auf diese Weise kann ein Anwender des Verfahrens sehr schnell die Qualität des vorgeschlagenen Justierverfahrens überprüfen.

Besonders vorteilhaft ist es, wenn das die Schritte a bis d beziehungsweise f und g voll automatisch ablaufen. Dies erhöht die Genauigkeit der Justierung und verkürzt die Dauer, die für die Justierung erforderlich ist. Voraussetzung hierfür ist, dass die entsprechende Plattenaufteilanlage eine fernbedienbare Verstelleinrichtung zum Verstellen des Vorritzerblatts senkrecht zu seiner Ebene umfasst, und dass die Steuer- und Regeleinrichtung die Verstelleinrichtung ansteuert und so die Position des Vorritzerblatts automatisch korrigieren kann.

Bei einem vollautomatischen Ablauf und einer Visualisierungsmöglichkeit kann dann, wenn bei der vollautomatischen Abarbeitung des Verfahrens nicht-schlüssige Werte für die Position und/oder Geometrie der Sägenut und fuge und/oder der Vorritzernut erkannt werden, die elektronische Erfassungseinrichtung die Sägenut oder -fuge und die Vorritzernut zusammen mit den erkannten Positionen und/oder Geometrien simultan darstellen, so dass der Benutzer die erkannte Position und/oder Geometrie manuell an die tatsächliche(n) Position(en) und/oder Geometrie(n) anpassen kann, wobei dann die Korrektur entsprechend den Schritten e und g wieder automatisch durchgeführt wird. Damit wird der Tatsache Rechnung getragen, dass es bei der Erkennung von Position und/oder Geometrie der eingebrachten Nuten beziehungsweise Fugen bisweilen zu Ungenauigkeiten kommen kann, die auf die vorgeschlagene Art und Weise sehr schnell eliminiert werden können.

Eine weitere vorteilhafte Ausgestaltung des erfindungsgemäßen Verfahrens ist, dass die Sägenut oder -fuge beim Schritt a bei einer Rückwärtsbewegung des Sägewagens eingebracht wird. Damit wird erreicht, dass die Sägezähne des Sägeblattes in das Material hinein und nicht, wie bei Vorwärtsfahrt, aus dem Material heraus schneiden. Durch diese Vorgehensweise werden beim Einbringen der Sägenut oder -fuge weniger Ausrisse erzeugt, was der Präzision des erfindungsgemäßen Justierverfahrens zu Gute kommt.

Zur Kontrolle der durchgeführten Korrektur können nach Schritt e beziehungsweise nach Schritt g die Schritte b bis d beziehungsweise f wiederholt werden, wodurch die Präzision des Justierverfahrens ebenfalls erhöht wird.

Die Erfassungseinrichtung kann gemeinsam mit dem Sägeblatt und dem Vorritzerblatt bewegt werden, beispielsweise in dem auf dem Sägewagen in Sägerichtung gesehen, zunächst die Erfassungseinrichtung, dann das Vorritzerblatt und dann das Sägeblatt angeordnet sind. Dies ist besonders kostengünstig. Die Erfassungseinrichtung kann aber auch an einem eigenen verfahrbaren Wagen angeordnet sein, wodurch sie im normalen Sägebetrieb in einer seitlichen Ruheposition verbleiben kann und hierdurch weniger verschmutzt.

In weiterer vorteilhaften Ausgestaltung des erfindungsgemäßen Verfahrens wird vorgeschlagen, dass mittels des Sägeblatts eine Sägefuge eingebracht, die Sägefuge von der Erfassungseinrichtung erfasst und die Qualität der Sägefuge, insbesondere Größe und/oder Anzahl von Ausreißern und/oder Amplitude und Frequenz einer Randwelle ausgewertet wird.

Hiermit wird auch während des normalen Sägebetriebs eine Qualitätskontrolle der hergestellten Trennfuge ermöglicht, so dass rechtzeitig beispielsweise auf eine verschließbedingte Abnutzung des Sägeblatts oder des Vorritzerblatts oder auf eine erforderliche neue Justierung der Flucht zwischen Sägeblatt und Vorritzerblatt hingewiesen wird.

Als Erfassungseinrichtung kommt beispielsweise eine Kamera in Frage, die auf besonders einfache Art und Weise Vorritzernut und Sägenut auf einem Bildschirm visualisieren kann. Denkbar als Erfassungseinrichtung ist aber auch eine Laser-Abtasteinrichtung oder eine Ultraschall-Abtasteinrichtung.

### Kurze Beschreibung der Zeichnung

Nachfolgend wird eine exemplarische Ausführungsform der vorliegenden Erfindung unter Bezugnahme auf die beiliegende Zeichnung näher erläutert. In der Zeichnung zeigen:
- Figur 1: eine Seitenansicht einer Plattenaufteilanlage mit einem Sägewagen;
- Figur 2: einen Schnitt längs der Linie II-II von Figur 1;
- Figur 3: eine perspektivische Darstellung eines Werkstücks und des Sägewagens von Figur 2 bei einem ersten Verfahrensschritt eines Verfahrens zum Justieren eines Vorritzerblatts in Flucht zu einem Sägeblatt;
- Figur 4: eine Darstellung ähnlich Figur 3 bei einem zweiten Verfahrensschritt;
- Figur 5: eine Darstellung ähnlich Figur 3 bei einem dritten Verfahrensschritt;
- Figur 6: eine Darstellung ähnlich Figur 3 bei einem vierten Verfahrensschritt;
- Figur 7: eine Darstellung ähnlich Figur 3 bei einem fünften Verfahrensschritt;
- Figur 8: eine Darstellung ähnlich Figur 3 bei einem sechsten Verfahrensschritt.
- Figur 9: eine erste Ansicht eines Monitors der Plattenaufteilanlage vor dem Verfahrensschritt von Figur 7;
- Figur 10: eine zweite Ansicht eines Monitors nach Beendigung des Justierverfahrens;
- Figur 11: eine Draufsicht auf ein Werkstück mit Ausreißern; und
- Figur 12: einen Schnitt längs der Linie XII-XII von Figur 11.

### Beschreibung einer exemplarischen Ausführungsform

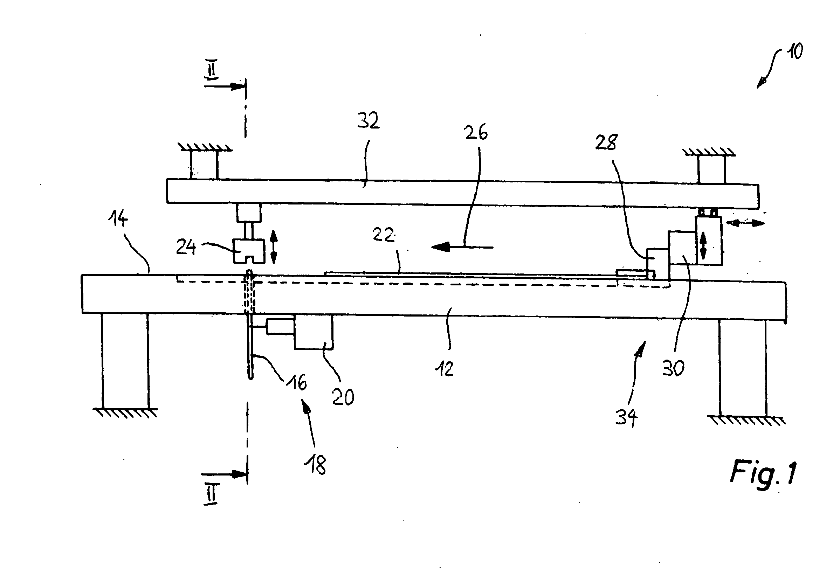

In Figur 1 trägt eine Plattenaufteilanlage für großformatige Platten insgesamt das Bezugszeichen 10. Sie umfasst einen horizontalen Auflagetische 12 mit einer ebenfalls horizontalen oberen Auflagefläche 14. Ein Sägeblatt 16 einer Säge 18 ist an einem senkrecht zur Zeichnungsebene von Figur 1 bewegbaren Sägewagen 20 angeordnet. Mit dieser Säge 18 kann eine auf der Auflagefläche 14 liegende großformatige Platte 22 in kleinere einzelne Platten oder Plattenstreifen aufgeteilt werden, wie sie beispielsweise bei der Herstellung von Möbelteilen Gebrauch finden. Zwar ist in Figur 1 nur eine einzelne Platte 22 gezeigt, es versteht sich jedoch, dass die nachfolgenden Ausführungen auch dann gelten, wenn statt dessen ein ganzer Plattenstapel auf dem Auflagetisch 12 liegt. Um die Platte 22 während des Sägevorganges sicher in Position zu halten, ist oberhalb der Säge 18 ein vertikal absenkbarer Druckbalken 24 vorgesehen.

Zum Aufteilen der Platte 22 in einzelne Streifen ist es erforderlich, die Platte 22 in Vorschubrichtung (Pfeil 26) zu bewegen. Hierzu sind mehrere in einer Richtung senkrecht zur Zeichnungsebene parallel angeordnete Greifeinrichtungen in Form von Spannzangen vorgesehen, von denen in Figur 1 nur eine mit dem Bezugszeichen 28 sichtbar ist. Die Spannzangen 28 sind an einem senkrecht zur Zeichnungsebene verlaufenden Positionsschieber 30 verschieblich gehalten. Letzterer kann wiederum längs zweier horizontaler Schienen, von denen in Figur 1 nur eine mit dem Bezugszeichen 32 sichtbar ist, längs zur Vorschubrichtung 26 bewegt werden. Die Spannzange 28, der Positionsschieber 30 und die Schienen 32 bilden insgesamt eine Vorschubvorrichtung 34.

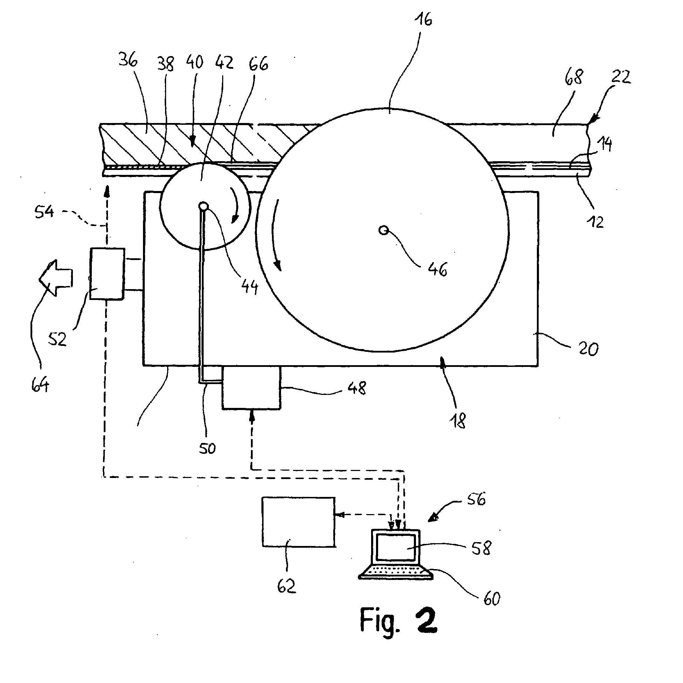

Nun wird der konstruktive Aufbau des Sägewagens 20 unter Bezugnahme auf Figur 2 im Detail erläutert. Zunächst erkennt man, dass die Platte 22 einen Spanplattenkern 36 und eine Oberflächenbeschichtung 38 aufweist, mit der sie auf der Auflagefläche 14 des Auflagetisches 12 aufliegt.

Am Sägewagen 20 ist ferner neben der Säge 18 mit dem Sägeblatt 16 ein Vorritzer 40 mit einem konischen Vorritzerblatt 42 befestigt. Das Vorritzerblatt 42 wird um eine Achse 44 angetrieben, das Sägeblatt 16 um eine Achse 46. Der Sägewagen 20 ist auf in den Figuren 1 und 2 nicht näher dargestellte Art und Weise quer zur Vorschubrichtung 26, in Figur 1 also senkrecht zur Zeichnungsebene, bewegbar.

Am Sägewagen 20 befindet sich eine elektrische Verstelleinrichtung 48, mit der, wie durch eine Doppellinie 50 angedeutet ist, das Vorritzerblatt 42 orthogonal zu seiner Blattebene, also auch senkrecht zur Blattebene von Figur 2, verstellt werden kann, und mit der, wie nicht näher dargestellt ist, auch die Eintauchtiefe des Vorritzerblatts 42 verstellt werden kann. Außerdem ist am Sägewagen 20 eine Videokamera 52 angebracht, welche zu einer Erfassungseinrichtung gehört und auf die Unterseite (ohne Bezugszeichen) der Platte 22 gerichtet ist, wie durch einen Visierpfeil 54 angedeutet ist. Alternativ zu einer Videokamera könnte auch eine Laser-Abtasteinrichtung oder eine Ultraschall-Abtasteinrichtung verwendet werden.

Die Videokamera 52 liefert entsprechende Signale an eine Steuer- und Regeleinrichtung 56, beispielsweise einen Computer, der wiederum einen Monitor 58 und eine Eingabeeinrichtung 60 umfasst. Die Steuer- und Regeleinrichtung 56 ist auch mit einer Auswerteeinrichtung 62 verbunden, auf deren Funktion weiter unter noch genauer eingegangen werden wird. Die elektrische Verstelleinrichtung 48 wird von der Steuer- und Regeleinrichtung 56 angesteuert, ebenso die nicht dargestellten Antriebsaggregate, welche das Sägeblatt 16 und das Vorritzerblatt 42 in Drehung versetzen. Im normalen Betrieb der Plattenaufteilanlage 10 bewegt sich der Sägewagen 20 längs einer Schnittlinie in Schnittrichtung, die durch einen Pfeil 64 in Figur 2 angedeutet ist. In Schnittrichtung 64 gesehen sind am Sägewagen 20 also zunächst die Videokamera 52, dann der Vorritzer 40, und dann die Säge 18 angeordnet. In einem nicht dargestellten Ausführungsbeispiel ist die Videokamera nicht am gleichen Sägewagen wie Säge und Vorritzer, sondern an einem separat verfahrbaren Wagen angeordnet.

Aufgrund der Anordnung von Säge 18 und Vorritzer 40 am Sägewagen 20 fräst das Vorritzerblatt 42 bei einer Bewegung des Sägewagens 20 in Schnittrichtung 64 zunächst eine Vorritzernut 66 in die Unterseite der Platte 22 ein. Die Tiefe dieser Vorritzernut 66 ist etwas größer als die Dicke der Oberflächenbeschichtung 38 der Platte 22 und hängt wegen der Konizität des Vorritzerblatts 42 von dessen Eintauchtiefe in die Platte 22 ab. Danach wird von dem Sägeblatt 16 der Säge 18 die eigentliche Trennfuge 68 in die Platte 22 eingeschnitten, durch die die Platte 22 in zwei separate Stücke aufgeteilt wird. Nach diesem Aufteil- oder Trennschnitt wird die Platte 22 von der Vorschubvorrichtung 34 in Vorschubrichtung 26 um eine gewünschte Strecke vorgeschoben, so dass dann der nächste Schnitt erfolgen kann. Auf diese Weise wird die Platte 22 sukzessive aufgeteilt.

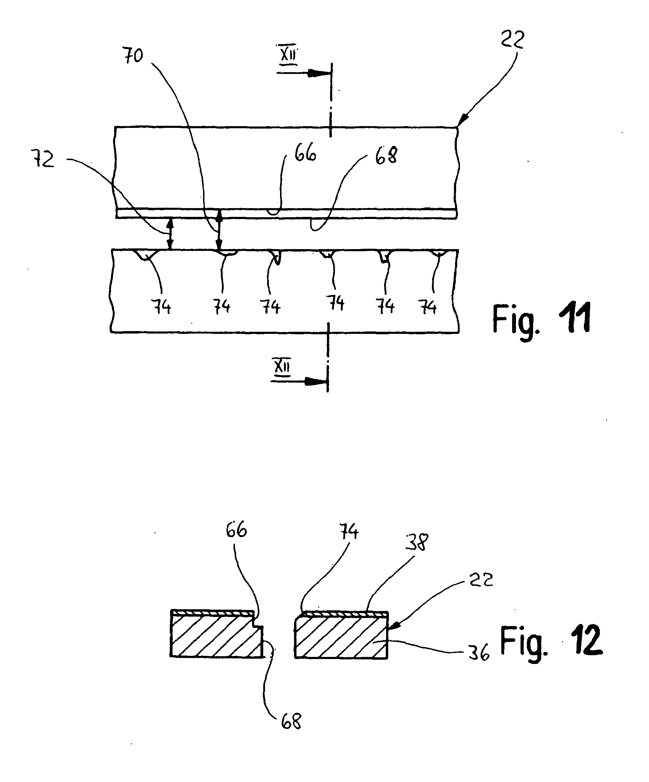

Wie aus den Figuren 11 und 12 hervorgeht, ist die Vorritzernut 66 üblicherweise etwas breiter (Breite 70) als die Sägefuge 68 (Breite 72). Dabei sollten die Mittelachsen von Vorritzernut 66 und Sägefuge 68 ungefähr fluchten, so dass der Überstand der Vorritzernut 66 über die Sägefuge 68 zu beiden Seiten ungefähr gleich ist. Bei dieser Vorgehensweise wird vermieden, dass beim Einbringen der Sägefuge 68 die Oberflächenbeschichtung 38 beschädigt wird, es also zu sogenannten "Ausreißern" kommt, die in den Figuren 11 und 12 mit 74 bezeichnet sind. Ursache für die in den Figuren 11 und 12 gezeigten Ausreißer 74 ist die dortige Tatsache, dass Vorritzernut 66 und Sägefuge 68 nicht in ausreichender Weise fluchten.

Um die besagten Ausreißer 74 zu verhindern, ist es wie gesagt wichtig, dass die Vorritzernut 66 und die Sägefuge 68 miteinander fluchten und dass zu beiden Seiten der Vorritzernut 66 gegenüber der Sägefuge 68 ein gewisser Überstand vorhanden ist. Da jedoch übliche Vorritzerblätter 42 mit Toleranzen behaftet sind, muss beispielsweise nach einem Werkzeugwechsel das Vorritzerblatt 42 gegenüber dem Sägeblatt 16 in einer Richtung senkrecht zur Blattebene von Figur 2 neu justiert werden, derart, dass die Vorritzernut 66 wieder mit der Sägefuge 68 fluchtet. Zu diesem Zweck wird bei der Plattenaufteilanlage 10 ein Justierverfahren durchgeführt, dessen Grundlage ein von der Videokamera 52 aufgenommenes Bild der Platte 22, und somit des Arbeitsergebnisses von Sägeblatt 16 und Vorritzerblatt 42 ist.

Dieses Justierverfahren ist als Computerprogramm auf einem Speicher der Steuer- und Regeleinrichtung 56 gespeichert. Das Justierverfahren wird nicht während des normalen Betriebs der Plattenaufteilanlage 10, wenn also tatsächlich Platten aufgeteilt werden sollen, durchgeführt, sondern als separates Verfahren, beispielsweise nach einem Wechsel des Vorritzerblatts 42. Dabei versteht es sich, dass das nachfolgend beschriebene Justierverfahren sowohl an einer beispielsweise als Verschnitt vorliegenden "Testplatte" als auch an einem Stück einer nachfolgend aufzuteilenden Platte 22 durchgeführt werden kann.

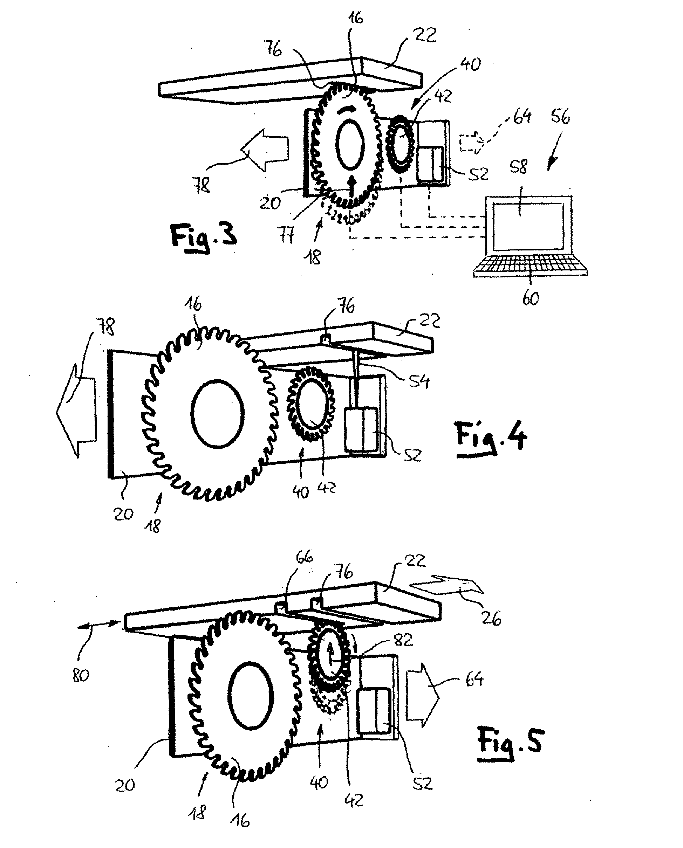

Aus Figur 3 ist ersichtlich, dass bei dem besagten Justierverfahren zunächst eine Sägenut 76 in die Unterseite der Platte 22 mittels des Sägeblatts 16 eingebracht wird. Durch den Begriff "Sägenut" wird verdeutlicht, dass das Sägeblatt 16 so eingestellt ist, dass es die Platte 22 nicht vollständig durchtrennt. Grundsätzlich wäre das vorliegende Justierverfahren aber auch dann einsetzbar, wenn in diesem Schritt von dem Sägeblatt 16 eine Sägefuge anstelle einer Sägenut eingebracht werden würde.

Die Sägenut 76 wird eingebracht, in dem das Sägeblatt 16 zunächst aus seiner in Figur 3 gestrichelt dargestellten Ruheposition entsprechend dem Pfeil 77 angehoben und in Drehung versetzt wird und der Sägewagen 20 in Rückwärtsrichtung 78, also entgegen der Sägerichtung 64, bewegt wird. Bei einer solchen Rückwärtsbewegung schneiden die Sägezähne des Sägeblatts 16 in das Material der Platte 22 hinein und nicht, wie bei einer Vorwärtsbewegung in Sägerichtung 64 aus dem Material der Platte 22 heraus. Dies hat den Vorteil, dass beim Einbringen der Sägenut 76 weniger Ausreißer erzeugt werden.

Wie aus Figur 4 hervorgeht, wird dann die erzeugte Sägenut 76 mittels der Videokamera 52 erfasst und deren Position in Bezug auf die Visierachse 54 ausgewertet. Bei der Visierachse 54 handelt es sich also um eine für die Erfassungseinrichtung beziehungsweise Videokamera 52 feste Referenz, auf die die erfassten Werte bezogen sind. Die erfassten Werte werden in einem Speicher der Steuer- und Regeleinrichtung 56 abgespeichert, ebenso das von der Videokamera 52 von der Sägenut 76 aufgenommene Bild.

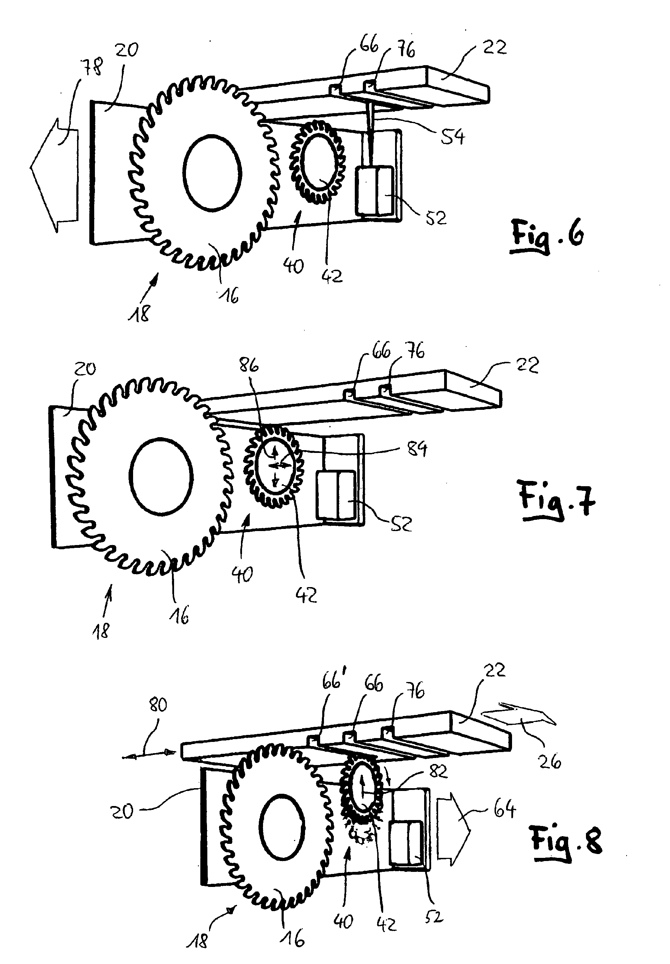

Im nächsten Schritt, der in Figur 5 dargestellt ist, wird die Platte 22 von der Vorschubvorrichtung 34 um eine bestimmte Vorschubstrecke D in Vorschubrichtung 26 bewegt. Dann wird der Sägewagen 20 in Sägerichtung 64 bewegt und mittels des Vorritzerblattes 42 eine Vorritzernut 66 in die Unterseite der Platte 22 eingebracht. Die Vorritzernut 66 ist also zur Sägenut 76 parallel, jedoch von dieser beabstandet. Um die Vorritzernut 66 einbringen zu können, wird das Vorritzerblatt 42 aus einer in Figur 5 gestrichelt angedeuteten Ruhestellung in die Arbeitsposition gefahren (Pfeil 82), in Drehung versetzt und der Sägewagen 20 in Sägerichtung 64 bewegt. Nun wird, wie aus Figur 6 ersichtlich ist, der Sägewagen 20 wieder in Rückwärtsrichtung 78 bewegt und dabei mittels der Videokamera 52 die erzeugte Vorritzernut 66 erfasst und ihre Position in Bezug auf die Visierachse 54 der Videokamera 52 und ihre Breite ausgewertet.

Von der Steuer- und Regeleinrichtung 56 wird nun die Position der Vorritzernut 66 mit der Position der Sägenut 76, jeweils bezogen auf die Visierachse 54, verglichen. Wenn die Abweichung der Position, beispielsweise der Mittelachse, der Vorritzernut 66 von der entsprechenden Position der Sägenut 76 einen Grenzwert erreicht oder überschreitet, wird aus diesem Vergleich ein Korrekturwert für die Position des Vorritzerblattes 42 errechnet und hierauf basierend die Position des Vorritzerblattes 42 quer zu seiner Blattebene durch eine Ansteuerung der Verstelleinrichtung 48 so korrigiert, dass die Mittelachsen einerseits der Vorritzernut 66 und andererseits der Sägenut 76, bezogen auf die gemeinsame und für die Erfassungseinrichtung 52 feste Referenz, nämlich die Visierachse 54, in etwa gleich liegen. Oder, mit anderen Worten, die Korrektur erfolgt so, dass der Überstand der Vorritzernut 66 über die Sägenut 76 zu beiden Seiten der Sägenut 76 ungefähr gleich ist. Diese Justierung des Vorritzerblattes 42 ist in Figur 7 durch einen horizontalen und zur Ebene des Vorritzerblatts 42 orthogonalen Doppelpfeil 84 angedeutet. Der oben beschriebene Vergleich mit einem Grenzwert kann aber auch entfallen und statt dessen grundsätzlich eine Korrektur herbeigeführt werden.

Von der Videokamera 52 wird jedoch nicht nur die Lage der Sägenut 76 und der Vorritzernut 66 bezogen auf die feste Referenz 54 erfasst, sondern auch deren Breite. Die Breite 70 (Figur 11) der Vorritzernut 70 wird mit der Breite 72 der Sägenut 76 verglichen und, wiederum vorzugsweise nur dann, wenn die Abweichung der erfassten Breite von einer gewünschten Breite einen Grenzwert erreicht oder überschreitet, ein Korrekturwert ermittelt, derart, dass ein bestimmter Überstand der Vorritzernut 66 zu beiden Seiten der Sägenut 76 erhalten wird. Da, wie eingangs ausgeführt worden ist, das Vorritzerblatt 42 konisch ist, kann die Breite der Vorritzernut 70 durch die Eintauchtiefe des Vorritzerblatts 42 in die Platte 22 eingestellt werden. Diese Korrektur der Eintauchtiefe ist in Figur 7 durch einen vertikalen Doppelpfeil 86 angedeutet.

Zur Kontrolle der durchgeführten Korrektur wird, wie aus Figur 8 ersichtlich ist, die Platte 22 nochmals um die Vorschubstrecke 80 in Vorschubrichtung 26 bewegt, das Vorritzerblatt 42 nochmals aus seiner Ruheposition in Pfeilrichtung 82 in seine Arbeitsstellung angehoben, in Drehung versetzt, und der Sägewagen 20 in Sägerichtung 64 bewegt. Hierdurch wird eine zweite Vorritzernut 66' erzeugt, die dann, wie dies oben im Zusammenhang mit Figur 6 beschrieben wurde, von der Videokamera 52 erfasst wird und deren Position relativ zur Visierachse 54 der Videokamera 52 ausgewertet wird. Je nach dem kann eine nochmalige Korrektur der Position des Vorritzerblatts 42 entsprechend Figur 7 durchgeführt werden oder es kann eine Fehlermeldung ausgegeben werden, wenn eine Korrektur als nicht möglich erscheint.

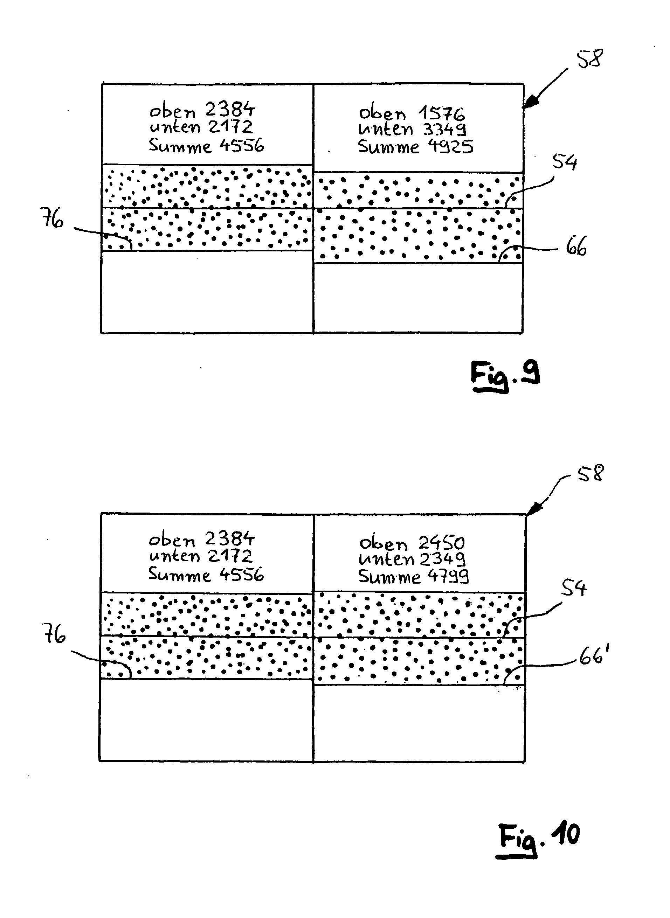

Das Bild, dass der Benutzer der Plattenaufteilanlage 10 auf dem Monitor 58 erhält, ist in den Figuren 9 und 10 gezeigt: Das Bild gemäß Figur 9 ergibt sich dabei nach dem Verfahrensschritt gemäß Figur 6, noch bevor die Position des Vorritzerblattes 42 korrigiert ist. Die als feste Referenz dienenden Visierachse 54 wird auf dem Monitor 58 als horizontale Linie dargestellt. In der linken Hälfte des Monitors 58 ist die Sägenut 76 dargestellt, die gegenüber der restlichen Unterseite der Platte 22 vergleichsweise dunkel erscheint, was in den Figuren 9 und 10 durch eine gepunktete Darstellung angedeutet ist. Die linke Seite in Figur 9 ist also jenes Bild, das von der Videokamera 52 gemäß dem Verfahrensschritt von Figur 4 aufgenommen wurde.

In der rechten Hälfte des Monitors 58 gemäß Figur 9 ist die Vorritzernut 66 dargestellt, wie sie von der Videokamera 52 im Verfahrensschritt gemäß Figur 6 erfasst wurde. In beiden Hälften werden dem Benutzer noch die erkannten Positionen der Begrenzungslinien der Sägenut 76 beziehungsweise der Vorritzernut 66 relativ zur Visierachse 54 numerisch angezeigt (in Mikrometern), und die Summe der beiden Abstände der Ränder von der Visierachse 54 ist jeweils ebenfalls angegeben. Es sei an dieser Stelle nochmals ausdrücklich darauf hingewiesen, dass die beiden auf dem Monitor 58 dargestellten Bilder zu unterschiedlichen Zeitpunkten und an unterschiedlichen Orten, jedoch mit der gleichen Videokamera 52 aufgenommen worden sind, und daher die Geometrie, die in diesen beiden Bildern sichtbar ist, dennoch auf die gleiche Referenz, nämlich die Visierachse 54, bezogen werden kann.

Aus der Visualisierung von Figur 9 ist ersichtlich, dass die auf der rechten Seite dargestellte Vorritzernut 66 gegenüber der Sägenut 76 nach unten versetzt ist, sie fluchtet also nicht in der gewünschten Art und Weise mit der Sägenut 76. Darüber hinaus soll die Vorritzernut 66 eine Breite von ungefähr 4800 µm aufweisen, wohingegen sie in dem in Figur 9 festgestellten Zustand eine Breite von ungefähr 4925 µm aufweist, was selbst bei einer Ausrichtung der Vorritzernut 66 auf die Sägenut 76 zu einem nicht erwünschten Überstandswert führen würde.

Durch die im Zusammenhang mit Figur 7 beschriebene Korrektur der Position des Vorritzerblatts 42 orthogonal zur Blattebene (Doppelpfeil 84) und durch die Korrektur der Eintauchtiefe (Doppelpfeil 86) wird, wie aus Figur 10 ersichtlich ist, einerseits die Position der Vorritzernut 66' so korrigiert, dass diese nun, bezogen auf die gleiche Referenz der Visierachse 54, wenigstens in etwa mit der Sägenut 76 fluchtet. Darüber hinaus wurde die Breite so korrigiert, dass die Vorritzernut 66' nun eine Breite von 4799 µm aufweist, was wenigstens in etwa zu gewünschten Überständen beidseits der Sägenut 76 führt.

Das in den Figuren 3 bis 8 beschriebene Verfahren läuft, gesteuert von der Steuer- und Regeleinrichtung 56, vollautomatisch ab. Die Darstellungen gemäß Figuren 9 und 10 erscheinen nur dann auf dem Monitor 58, wenn bei der automatischen Erkennung mittels üblicher Bilderkennungsverfahren der Position und der Geometrie der Sägenut 76 und der Vorritzernut 66 nicht schlüssige Werte entdeckt werden. Durch die in diesem Fall erfolgende Visualisierung auf dem Monitor 58 kann der Benutzer entscheiden, ob er die Darstellung gemäß Figur 9 für eine manuelle beziehungsweise halbmanuelle Justierung verwendet. Falls erforderlich, kann der Benutzer die von der Steuer- und Regeleinrichtung 56 im Sinne einer Bilderkennung automatisch vorgenommene Erfassung der Kanten von Vorritzernut 66 und Sägenut 76 korrigieren, indem er beispielsweise die von der Steuer- und Regeleinrichtung 56 erfasste Kante auf die tatsächliche und im Bild dargestellte Kante verschiebt. Die nachfolgende Verstellung entsprechend Figur 7 erfolgt dann wieder automatisch, bezieht sich aber auf die vom Benutzer korrigierten Bilder.

In die Steuer- und Regeleinrichtung 56 ist ferner eine Auswerteeinrichtung integriert, welche anhand der Bilder, die die Videokamera 52 von der Vorritzernut 66 und der Sägenut 76 oder Sägefuge 68 liefert, deren Qualität feststellt beziehungsweise auswertet. Insbesondere kann eine solche Auswerteeinrichtung Größe und/oder Anzahl von Ausreißern 74 (vergleiche Figuren 11 und 12) und/oder Amplitude und Frequenz einer Randwelle auswerten. Auch hier ist Voraussetzung, dass die Ausreißer beziehungsweise die Randwelle von der Erfassungseinrichtung, beispielsweise der Videokamera 52, erfasst und im Rahmen einer Bilderkennung durch die Steuer- und Regeleinrichtung 56 erkannt werden.

## Patentansprüche

1. Verfahren zum Betreiben einer Plattenaufteilanlage (10) für großformatige Platten (22), insbesondere zur Herstellung von Möbeln, bei dem eine Sägefuge (68) durch eine Bewegung eines Sägewagens (20) längs einer Schnittlinie hergestellt wird, wobei bei dieser Bewegung zunächst ein Vorritzer (40) mit einem Vorritzerblatt (42) eine Vorritzernut (66) in eine Unterseite der Platte (22) einbringt, und bei dieser Bewegung ein in Sägerichtung (64) gesehen hinter dem Vorritzerblatt (42) angeordnetes und wenigstens im wesentlichen in der Ebene des Vorritzerblatts (42) liegendes Sägeblatt (16) die Sägefuge (68) herstellt, und bei dem die Platte (22) oder der Plattenstapel auf einem Auflagetisch (12) liegt und zur sukzessiven Aufteilung von einer Vorschubvorrichtung (34) quer zur Schnittlinie bewegt wird, **dadurch gekennzeichnet, dass** das Verfahren zeitweise zusätzlich folgende Schritte umfasst:
a. Einbringen einer Sägenut (76) oder -fuge in die Platte (20) mittels des Sägeblatts (16), Erfassen der Sägenut (76) oder -fuge unter Verwendung einer elektronischen Erfassungseinrichtung (52), Abspeichern der erfassten Daten;
b. Verschieben der Platte (20) mittels der Vorschubvorrichtung (34) um eine bestimmte Vorschubstrecke (80);
c. Einbringen einer zur Sägenut (76) oder -fuge parallelen, von dieser jedoch beabstandeten Vorritzernut (66) in die Platte (20) mittels des Vorritzerblattes (42), Erfassen der Vorritzernut (66) unter Verwendung der selben elektronischen Erfassungseinrichtung (52) wie in Schritt a;
d. Vergleichen der Position der Vorritzernut (66) und der Position der Sägenut (76) oder -fuge bezogen auf eine gemeinsame, für die Erfassungseinrichtung (52) feste Referenz (54);
e. Gegebenenfalls: Korrigieren der Position des Vorritzerblattes (42) und/oder des Sägeblatts (16) orthogonal zur Blattebene so, dass die Mittelachsen der Vorritzernut (66) und der Sägenut (76), bezogen auf die gemeinsame und für die Erfassungseinrichtung (52) feste Referenz (54), in etwa gleich liegen.

2. Verfahren nach Anspruch 1, **dadurch gekennzeichnet, dass** es zusätzlich folgende Schritte umfasst:
f. Vergleichen der Breite (70) der Vorritzernut (66) und der Breite (72) der Sägenut oder -fuge (76);
g. Gegebenenfalls: Korrigieren der Breite (70) der Vorritzernut (66) so, dass ein beidseitiger Überstand der Vorritzernut (66) über die Sägenut (76) wenigstens in etwa einen gewünschten Wert hat.

3. Verfahren nach einem der Ansprüche 1 oder 2, **dadurch gekennzeichnet, dass** die elektronische Erfassungseinrichtung mindestens zeitweise ein Bild der Sägenut oder -fuge und der Vorritzernut liefert.

4. Verfahren nach einem der vorhergehenden Ansprüche, **dadurch gekennzeichnet, dass** die Schritte a bis d beziehungsweise f und g vollautomatisch ablaufen.

5. Verfahren nach den Ansprüchen 3 und 4, **dadurch gekennzeichnet, dass** dann, wenn bei der vollautomatischen Abarbeitung des Verfahrens nicht-schlüssige Werte für die Position und/oder Geometrie der Sägenut (76) oder -fuge und/oder der Vorritzernut (66) erkannt werden, die elektronische Erfassungseinrichtung (52) die Sägenut (76) oder -fuge und die Vorritzernut (66) zusammen mit den erkannten Positionen und/oder Geometrien simultan darstellt, so dass der Benutzer die erkannte Position und/oder Geometrie manuell an die tatsächliche(n) Position(en) und/oder Geometrie(n) anpassen kann, wobei dann die Korrektur entsprechend den Schritten e und g wieder automatisch durchgeführt wird.

6. Verfahren nach einem der vorhergehenden Ansprüche, **dadurch gekennzeichnet, dass** die Sägenut (76) oder -fuge beim Schritt a bei einer Rückwärtsbewegung (78) des Sägewagens (20) eingebracht wird.

7. Verfahren nach einem der vorhergehenden Ansprüche, **dadurch gekennzeichnet, dass** zur Kontrolle der durchgeführten Korrektur nach Schritt e bzw. nach Schritt g die Schritte b bis d bzw. f wiederholt werden.

8. Verfahren nach einem der vorhergehenden Ansprüche, **dadurch gekennzeichnet, dass** die Erfassungseinrichtung (52) gemeinsam mit dem Sägeblatt (16) und dem Vorritzerblatt (42) bewegt wird.

9. Verfahren nach einem der vorhergehenden Ansprüche, **dadurch gekennzeichnet, dass** mittels des Sägeblatts (16) eine Sägefuge (68) eingebracht, die Sägefuge (68) von der Erfassungseinrichtung (52) erfasst und die Qualität der Sägefuge(68), insbesondere Größe und/oder Anzahl von Ausreißern (74) und/oder Amplitude und Frequenz einer Randwelle ausgewertet wird.

10. Plattenaufteilanlage (10) für großformatige Platten (22), insbesondere zur Herstellung von Möbeln, mit einem Auflagetisch (12), mit einem längs einer Schnittlinie bewegbaren Sägewagen (20) mit einem Sägeblatt (16) und einem wenigstens in etwa in dessen Ebene angeordneten Vorritzerblatt (42), mit einer Vorschubvorrichtung (34) zum Verschieben der auf dem Auflagetisch (12) liegenden Platte(n) (22), und mit einer Verstelleinrichtung (48), mit der die Position des Vorritzerblatts (42) orthogonal zur Blattebene verstellt werden kann, **dadurch gekennzeichnet, dass** sie eine Erfassungseinrichtung (52) zur Erfassung des Arbeitsergebnisses von Vorritzerblatt (42) und Sägeblatt (16) und eine Steuer- und/oder Regeleinrichtung (56) umfasst, die zur Anwendung in einem Verfahren nach einem der vorhergehenden Ansprüche programmiert ist.

11. Plattenaufteilanlage (10) nach Anspruch 10, **dadurch gekennzeichnet, dass** das Vorritzerblatt (42) mindestens bereichsweise konisch und seine Eintauchtiefe in die Platte (22) einstellbar ist.

12. Plattenaufteilanlage (10) nach einem der Ansprüche 10 oder 11, **dadurch gekennzeichnet, dass** die Erfassungseinrichtung eine Kamera (52) und/oder eine Laser-Abtasteinrichtung und/oder eine Ultraschall-Abtasteinrichtung umfasst.

13. Plattenaufteilanlage (10) nach einem der Ansprüche 10 bis 12, **dadurch gekennzeichnet, dass** die Erfassungseinrichtung Signale für einen Monitor (58) bereitstellt, auf dem die Vorritzernut (66) und die Sägenut (76) oder -fuge visualisierbar sind.

14. Plattenaufteilanlage (10) nach einem der Ansprüche 10 bis 13, **dadurch gekennzeichnet, dass** sie eine fernbedienbare Verstelleinrichtung (48) zum Verstellen des Vorritzerblatts (42) senkrecht zu seiner Ebene umfasst.

15. Plattenaufteilanlage (10) nach Anspruch 4, **dadurch gekennzeichnet, dass** die Steuer- und Regeleinrichtung (56) die Verstelleinrichtung (48) ansteuert und so die Position des Vorritzerblatts (42) automatisch korrigiert.

16. Plattenaufteilanlage nach einem der Ansprüche 10 bis 15, **dadurch gekennzeichnet, dass** mindestens ein Teil der Erfassungseinrichtung an einem eigenen verfahrbaren Wagen angeordnet ist oder dass auf dem Sägewagen (20), in Sägerichtung (64) gesehen, zunächst die Erfassungseinrichtung (52), dann das Vorritzerblatt (42) und dann das Sägeblatt (16) angeordnet sind.

17. Plattenaufteilanlage (10) nach einem der Ansprüche 10 bis 16, **dadurch gekennzeichnet, dass** sie eine Auswerteeinrichtung (62) umfasst, welche die Qualität der Sägenut (68) oder -fuge, insbesondere Größe und/oder Anzahl von Ausreißern (74) und/oder Amplitude und Frequenz einer Randwelle, auswertet.

## Claims

1. A method for operating a board dividing device (10) for large-format boards (22), specifically for manufacturing furniture, in which a sawed joint (68) is created by a motion of a saw carriage (20) along a cutting line, whereby in this motion a scorer (40) having a scorer blade (42) creates a scored groove (66) in a lower side of the board (22), and in this motion, a saw blade (16), which is arranged behind the scorer blade (42), seen in a sawing direction (64), and which lies at least mainly in the plane of the scorer blade (42), creates the sawed joint (68), and in which the board (22) or the stack of boards is situated on a supporting table (12) and is moved by a feed device (34) transverse to the cutting line so as to accomplish successive dividing processes, wherein the method occasionally includes the following additional steps:
a. Creating a sawed groove (76) or joint in the board (20) using the saw blade (16), Detecting the sawed groove (76) or joint using an electronic detection device (52), Storing the detected data;
b. Shifting the board (20) a specific feed distance (80) using the feed device (34);
c. Creating a scored groove (66) in the board (20) parallel to the sawed groove (76) or joint but at a distance from the latter using the scorer blade (42), Detecting the scored groove (66) using the same electronic detection device (52) as in step a;
d. Comparing the position of the scored groove (66) and the position of the sawed groove (76) or joint with respect to a common reference (54) that is fixed for the detection device (52);
e. If necessary: Correcting the position of the scorer blade (42) and/or the saw blade (16) orthogonally to the blade plane such that the central axes of the scored groove (66) and of the sawed groove (76) are approximately identical with respect to the common reference (54) that is fixed for the detection device (52).

2. The method as recited in Claim 1, wherein it also includes the following steps:
f. Comparing the width (70) of the scored groove (66) and the width (72) of the sawed groove or joint (76);
g. If necessary: Correcting the width (70) of the scored groove (66) so that a protrusion of the scored groove (56) on both sides over the sawed groove (76) has at least approximately a desired value.

3. The method as recited in any of Claims 1 or 2, wherein the electronic detection device at least occasionally furnishes an image of the sawed groove or joint and of the scored groove.

4. The method as recited in any of the preceding claims, wherein the steps a through d, and f and g are carried out completely automatically.

5. The method as recited in Claims 3 and 4, wherein, if inconclusive values for the position and/or geometry of the sawed groove (76) or joint and/or of the scored groove (66) are detected when the method is executed fully automatically, the electronic detection device (52) represents the sawed groove (76) or joint and the scored groove (66) along with the detected positions and/or geometries simultaneously, so that the operator can manually adjust the detected position and/or geometry to the actual position(s) and/or geometry(geometries), whereby the correction with respect to steps e and g is again carried out automatically.

6. The method as recited in any of the preceding claims, wherein the sawed groove (76) or joint in step a is created in a reverse motion (78) of the saw carriage (20).

7. The method as recited in any of the preceding claims, wherein in order to monitor the executed correction in accordance with step e or in accordance with step g, the steps b through d, or f, are repeated.

8. The method as recited in any of the preceding claims, wherein the detection device (52) is moved together with the saw blade (16) and the scorer blade (42).

9. The method as recited in any of the preceding claims, wherein a sawed joint (68) is created by the saw blade (16), the sawed joint (68) is detected by the detection device (52), and the quality of the sawed joint (68), in particular the size and/or number of breakout pieces (74) and/or the amplitude and frequency of an end convolution are evaluated.

10. A board dividing device (10) for large-format boards (22), specifically for manufacturing furniture, comprising a supporting table (12), a saw carriage (20) that can be moved along a cutting line and that has a saw blade (16) and a scorer blade (42) that is arranged at least approximately in the plane of the saw blade, a feed device (34) for moving the board(s) (22) situated on the supporting table (12), and an adjusting device (40) which can adjust the position of the scorer blade (42) orthogonally with respect to the blade plane, wherein it includes a detection device (52) to detect the work result of the scorer blade (42) and the saw blade (16), and a control and/or regulating device (56), which is programmed to be used in a method as recited in any of the preceding claims.

11. The board dividing device (10) as recited in Claim 10, wherein the scorer blade (42) is conical at least in certain areas and its cutting depth into the board (22) may be adjusted.

12. The board dividing device (10) as recited in any of Claims 10 or 11, wherein the detection device includes a camera (52) and/or a laser scanning device and/or an ultrasound scanning device.

13. The board dividing device (10) as recited in any of Claims 10 to 12, wherein the detection device makes signals available for a monitor (58) on which the scored groove (66) and the sawed groove (76) or joint may be visualized.

14. The board dividing device (10) as recited in any of Claims 10 to 13, wherein it includes a remote controlled adjusting device (48) for adjusting the scorer blade (42) perpendicular to its plane.

15. The board dividing device (10) as recited in Claim 14, wherein the control and regulating device (56) drives the adjusting device (48) and thus automatically corrects the position of the scorer blade (48).

16. The board dividing device as recited in any of Claims 10 to 15, wherein at least a portion of the detection device is arranged on its own movable carriage, or first the detection device (52) and then the scorer blade (42) and then the saw blade (16) are arranged on the saw carriage (20), viewed in the sawing direction (64).

17. The board dividing device (10) as recited in any of Claims 10 to 16, wherein it includes an evaluation device (2), which evaluates the quality of the sawed groove (68) or joint, in particular the size and/or number of breakout pieces (74) and/or the amplitude and frequency of an end convolution.

## Revendications

1. Procédé pour l'exploitation d'une installation de découpe de panneaux (10) pour des panneaux (22) de grand format, en particulier pour la fabrication de meubles, dans lequel une fente de sciage (68) est réalisée par un déplacement d'un chariot de scie (20) le long d'une ligne de coupe, sachant que pendant ce déplacement, d'abord un dispositif de pré-rainurage (40) avec une lame de pré-rainurage (42) réalise une pré-rainure (66) dans une face inférieure du panneau (22), et pendant ce déplacement une lame de scie (16), disposée en amont de la lame de pré-rainurage (42) par référence à la direction de sciage (64), et située au moins sensiblement dans le plan de la lame de pré-rainurage (42), réalise la fente de sciage (68), et dans lequel le panneau (22) ou la pile de panneaux est posé sur une table de réception (12) et, en vue de la découpe successive, est déplacé par un dispositif d'avance (34) transversalement à la ligne de coupe, **caractérisé en ce que** ledit procédé comporte temporairement en plus les étapes suivantes:
a) réalisation d'une rainure de sciage (76) ou fente de sciage dans le panneau (22) au moyen d'une lame de scie (16), détection de la rainure de sciage (68) ou fente de sciage moyennant l'utilisation d'un dispositif de détection (52) électronique, stockage des données enregistrées;
b) déplacement du panneau (22) au moyen du dispositif d'avance (34) sur une distance d'avance (80) déterminée;
c) réalisation d'une pré-rainure (66), parallèle à la rainure de sciage (68) ou fente de sciage, mais située à distance de celle-ci, dans le panneau (22) au moyen de la lame de pré-rainurage (42), détection de la pré-rainure (66) moyennant l'utilisation d'un dispositif de détection (52) électronique, comme dans l'étape a);
d) comparaison de la position de la pré-rainure (66) et de la position de la rainure de sciage (68) ou fente de sciage par rapport à une référence (54) commune, fixe pour le dispositif de détection (52);
e) le cas échéant, correction de la position de la lame de pré-rainurage (42) et/ou de la lame de scie (16) orthogonalement au plan de la lame, de telle sorte que les axes médians de la pré-rainure (66) et de la rainure de sciage (68) sont positionnés sensiblement de manière identique par rapport à la référence (54 commune et fixe pour le dispositif de détection (52).

2. Procédé selon la revendication 1, **caractérisé en ce qu'**il comporte en plus les étapes suivantes:
f) comparaison de la largeur (70) de la pré-rainure (66) et de la largeur de la rainure de sciage (68) ou fente de sciage;
g) le cas échéant, correction de la largeur (70) de la pré-rainure (66), de telle sorte que la pré-rainure (66) dépasse de part et d'autre de la rainure de sciage (68), au moins d'une valeur souhaitée.

3. Procédé selon la revendication 1 ou 2, **caractérisé en ce que** le dispositif de détection électronique fournit au moins temporairement une image de la rainure de sciage ou fente de sciage et de la pré-rainure.

4. Procédé selon l'une quelconque des revendications précédentes, **caractérisé en ce que** les étapes a) à d) et f) et g) se déroulent de manière tout automatique.

5. Procédé selon les revendications 3 et 4, **caractérisé en ce que**, lorsque pendant le déroulement tout automatique du procédé sont détectées des valeurs non probantes pour la position et/ou la géométrie de la rainure de sciage (68) ou fente de sciage et/ou de la pré-rainure (66), le dispositif de détection (52) électronique représente simultanément la rainure de sciage (68) ou fente de sciage et la pré-rainure (66) conjointement avec les positions et/ou les géométries détectées, de telle sorte que la position et/ou la géométrie détectées peuvent être ajustées manuellement par l'utilisateur à la ou aux position(s) et/ou géométrie(s) réelle(s), la correction étant alors effectuée à nouveau de manière tout automatique conformément aux étapes e) et g).

6. Procédé selon l'une quelconque des revendications précédentes, **caractérisé en ce que** la rainure de sciage (68) ou fente de sciage est réalisée au cours de l'étape a) pendant un mouvement vers l'arrière (78) du chariot de scie (20).

7. Procédé selon l'une quelconque des revendications précédentes, **caractérisé en ce que**, pour le contrôle de la correction effectuée selon l'étape e) ou selon l'étape g), les étapes b) à d) ou f) sont répétées.

8. Procédé selon l'une quelconque des revendications précédentes, **caractérisé en ce que** le dispositif de détection (52) est déplacé conjointement avec la lame de scie (16) et la lame de pré-rainurage (42).

9. Procédé selon l'une quelconque des revendications précédentes, **caractérisé en ce qu'**une fente de sciage (68) est réalisée au moyen de la lame de scie (16), la fente de sciage (68) est détectée par le dispositif de détection (52) et la qualité de la fente de sciage (78) est analysée, en particulier la taille et/ou le nombre de points aberrants (74) et/ou l'amplitude et la fréquence des ondulations en rives.

10. Installation de découpe de panneaux (10) pour des panneaux (22) de grand format, en particulier pour la fabrication de meubles, avec une table de réception (12), avec un chariot de scie (20), mobile le long d'une ligne de coupe et muni d'une lame de scie (16) et d'au moins une lame de pré-rainurage (42), agencée sensiblement dans le plan de cette dernière, avec un dispositif d'avance (34) pour déplacer le/les panneau(x) (22) posé(s) sur la table de réception (12), et avec un dispositif de déplacement (48), qui permet de déplacer la position de la lame de pré-rainurage (42) orthogonalement au plan de la lame, **caractérisée en ce qu'**elle comporte un dispositif de détection (52) destiné à détecter le résultat du travail de la lame de pré-rainurage (42) et de la lame de scie (16), et un dispositif de commande et de réglage (56), qui est programmé pour l'utilisation dans un procédé selon l'une des revendications précédentes.

11. Installation de découpe de panneaux (10) selon la revendication 10, **caractérisée en ce que** la lame de pré-rainurage (42) est au moins conique par zones et sa profondeur de pénétration dans le panneau (22) est réglable.

12. Installation de découpe de panneaux (10) selon la revendication 10 ou 11, **caractérisée en ce que** le dispositif de détection comporte une caméra (52) et/ou un palpeur à laser et/ou un palpeur à ultrasons.

13. Installation de découpe de panneaux (10) selon l'une quelconque des revendications 10 à 12, **caractérisée en ce que** le dispositif de détection délivre des signaux pour un moniteur (58), sur lequel peuvent être visualisées la pré-rainure (66) et la rainure de sciage (68) ou fente de sciage.

14. Installation de découpe de panneaux (10) selon l'une quelconque des revendications 10 à 13, **caractérisée en ce qu'**elle comporte un dispositif de déplacement (48) apte à être commandé à distance pour le déplacement de la lame de pré-rainurage (42) perpendiculairement à son plan.

15. Installation de découpe de panneaux (10) selon la revendication 14, **caractérisée en ce que** le dispositif de commande et de réglage (56) commande le dispositif de déplacement (48) et corrige ainsi automatiquement la position de la lame de pré-rainurage (42).

16. Installation de découpe de panneaux (10) selon l'une quelconque des revendications 10 à 15, **caractérisée en ce qu'**au moins une partie du dispositif de détection est disposée sur son propre chariot mobile ou **en ce que** sur le chariot de scie (20) sont disposés, par référence à la direction de sciage (64), d'abord le dispositif de détection (52), puis la lame de pré-rainurage (42) et ensuite la lame de scie (16).

17. Installation de découpe de panneaux (10) selon l'une quelconque des revendications 10 à 16, **caractérisée en ce qu'**elle comporte un dispositif d'analyse (62) qui analyse la qualité de la rainure de sciage (68) ou fente de sciage, en particulier la taille et/ou le nombre de points aberrants (74) et/ou l'amplitude et la fréquence des ondulations en rives.
